## Europäisches Patentamt
## European Patent Office
## Office européen des brevets

(19)

(11) Numéro de publication: **0 005 389**
**B1**

(12)

# FASCICULE DE BREVET EUROPEEN

(45) Date de publication du fascicule du brevet:
**14.03.84**

(21) Numéro de dépôt: **79400245.1**

(22) Date de dépôt: **13.04.79**

(51) Int. Cl.³: **C 03 B 23/02,** C 03 B 29/04,
C 03 B 27/00, C 03 B 35/00

(54) **Installation de bombage et de trempe de feuilles de verre.**

(30) Priorité: **17.04.78 FR 7811165**

(43) Date de publication de la demande:
**14.11.79 Bulletin 79/23**

(45) Mention de la délivrance du brevet:
**14.03.84 Bulletin 84/11**

(84) Etats contractants désignés:
**BE CH DE FR GB IT LU NL SE**

(56) Documents cités:
**DE - B - 2 413 270**
**FR - A - 2 129 919**
**FR - A - 2 189 330**
**FR - A - 2 200 169**
**FR - A - 2 221 409**
**US - A - 3 545 951**

(73) Titulaire: **SAINT-GOBAIN VITRAGE, Les
Miroirs 18, avenue d'Alsace, F-92400 Courbevoie (FR)**

(72) Inventeur: **Mairlot, Henri, 218 Rue du Bois de l'Orvée
Chatelet, B-6300 Acoz (BE)**

(74) Mandataire: **Leconte, Jean-Gérard et al, Saint-Gobain
Recherche 39, Quai Lucien Lefranc,
F-93304 Aubervilliers Cedex (FR)**

BUNDESDRUCKEREI BERLIN

La présente invention concerne une installation de bombage et de trempe de feuilles de verre en position horizontale.

Le verre, chauffé dans un four jusqu'à une température au moins égale à sa température de ramollissement, progresse ensuite dans un poste de bombage où il est cintré sur une forme de bombage, puis pénètre dans l'enceinte d'un poste de trempe où il est brusquement refroidi.

Il est connu par le brevet FR 2 221 409 de pratiquer le bombage à l'intérieur d'une enceinte close, isolée thermiquement, maintenue à température de bombage, à l'aide d'une forme de bombage constituée d'une pluralité de rouleaux droits répartis en deux nappes de rouleaux parallèles entre eux, les plans contenant les axes des rouleaux de chaque nappe faisant entre eux un angle et leur intersection étant perpendiculaire à l'axe des rouleaux, le sommet de l'angle formé par ces deux plans étant dirigé vers le bas.

Mais lorsqu'on veut utiliser une forme de bombage du type de celle décrite dans le document FR-A-2 189 330 qui comporte une série de tiges cintrées, orientables chacune autour d'un axe passant par ses deux extrémités et recouvertes chacune d'une gaine tubulaire tournante qui s'appuie de proche en proche sur des bagues de glissement en graphite montées sur la tige cintrée elle-même, on constate que dans l'enceinte close du bombage, à la température élevée voisine de la température de trempe du verre, le graphite des bagues s'oxyde rapidement, empêchant ainsi la rotation des gaines et bloquant alors l'avance des feuilles de verre.

La présente invention vise à remédier à cet inconvénient de l'oxydation des bagues en graphite, de façon à permettre l'utilisation des formes de bombage performantes que sont les tiges cintrées recouvertes de gaines tubulaires tournantes en appui de proche en proche sur des bagues de glissement en graphite, à l'intérieur d'enceintes closes, maintenues à température élevée.

Elle propose pour cela une installation de bombage et de trempe de feuilles de verre comportant une enceinte de bombage fermée maintenue à la température élevée du bombage et renfermant une forme de bombage qui comporte des gaines tubulaires tournantes reposant sur des bagues en graphite montées sur des tiges cintrées orientables et creuses dans lesquelles circule un fluide de refroidissement et/ou non oxydant.

Dans une forme de réalisation, ce fluide est un liquide refroidisseur du type eau, huile ou sel fondu qui ramène la température des tiges cintrées en graphite au-dessous de 250 à 300°C, seuil au delà duquel commencerait l'oxydation à l'air de la partie des bagues en graphite qui sont à leur contact, cette partie des bagues étant la plus vulnérable puisque soumise à une double usure par frottement et par oxydation.

Dans une variante de réalisation, la présente invention propose d'utiliser des tiges cintrées en acier spécial, type inoxydable, les tiges cintrées étant des tubes creux, percés de place en place et particulièrement dans leur portion centrale, dans lesquels on injecte un gaz réducteur ou neutre. Ce gaz peut être de l'azote ou un mélange d'azote et d'hydrogène.

Avantageusement, pour éviter l'oxydation des bagues de graphite situées aux extrémités des tiges cintrées, lesdites extrémités seront situées à l'extérieur de l'enceinte de bombage à température élevée.

L'invention sera décrite plus en détail en référence aux figures qui représentent:

Figure 1 une installation de bombage et trempe conforme à l'invention, avec en regard le diagramme des températures dans les différentes parties de l'installation,

Figure 2 un schéma d'un élément de bombage, à savoir, tige cintrée gaine et bague de glissement, refroidi par un liquide,

Figure 3 une variante du mode de réalisation illustré par la figure 2,

Figure 4 un élément de bombage, à savoir une tige cintrée, la gaine la recouvrant et les bagues de glissement, balayé par un gaz neutre ou réducteur,

Figure 5 une coupe schématique du poste de bombage balayé par un gaz neutre ou réducteur.

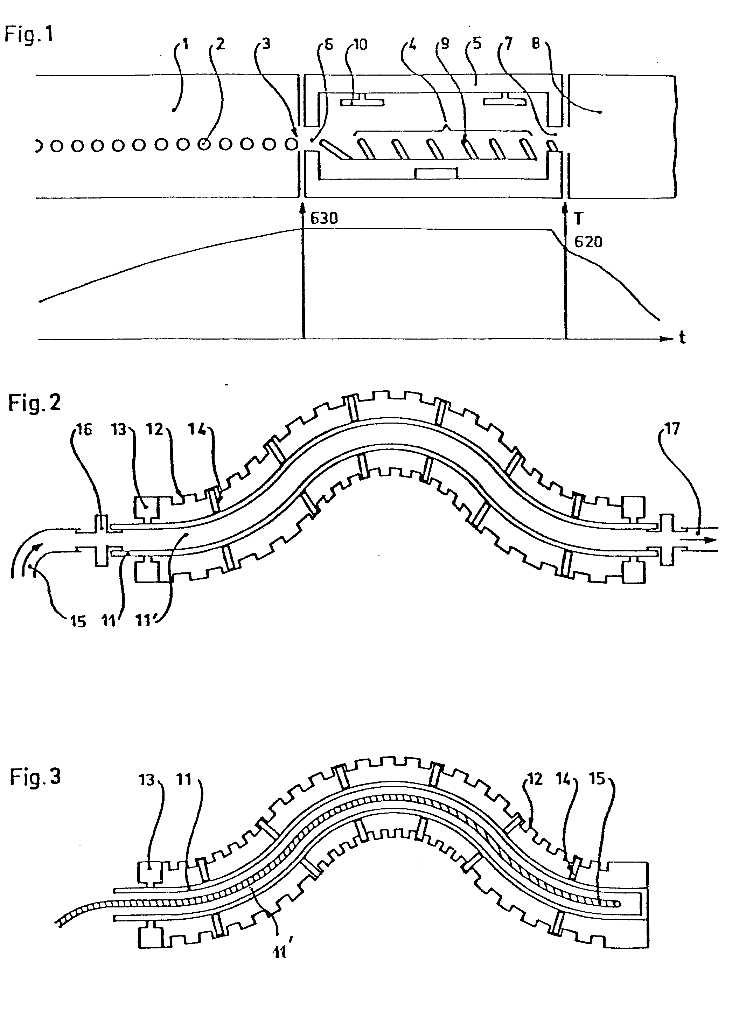

La figure 1 montre une installation de bombage et de trempe du verre. Elle comporte un four 1 dans lequel sont montrés des rouleaux 2 servant au support et au transport des feuilles de verre jusqu'à son extrémité de sortie 3, un poste de bombage qui est essentiellement une forme de bombage 4 à l'intérieur d'une enceinte 5 fermée et calorifugée dans laquelle sont ménagées deux ouvertures, une ouverture 6 à l'avant pour l'entrée des feuilles de verre, une ouverture 7 à l'arrière pour la sortie des feuilles de verre une fois bombées, et un poste de trempe 8. La forme de bombage est par exemple constituée par une pluralité de tiges cintrées 9 inclinées et dont l'inclinaison détermine le rayon de bombage. Il peut s'agir d'un lit de bombage fixe avec des tiges ayant toutes constamment la même inclinaison maximale correspondant au bombage désiré, les feuilles de verre passant alors directement des rouleaux droits 2 du four sur les tiges cintrées redressées.

Il peut s'agir d'un lit de bombage progressif avec d'abord une série de tiges fixes progressivement de plus en plus redressées jusqu'au redressement maximum qui définit le bombage et avec ensuite une autre série de tiges, fixes également, ayant toutes ce redressement maximum. Il peut s'agir encore d'un lit mobile, constitué de tiges qui sont couchées en position horizontale lorsqu'elles sont au repos et qui se redressent toutes d'un même angle par rapport à l'horizontale lorsqu'elles sont chargées d'une feuille de verre à bomber. L'enceinte 5 du poste de bombage peut être équipée de résistances chauffantes 10 et d'un dispositif de régulation de température.

Grâce au calorifugeage du poste de bombage, les pertes de chaleur du verre pendant le bombage sont grandement diminuées et elles peuvent même être supprimées lorsque les éléments chauffants 10 sont installés et si une régulation en température est prévue. Ainsi, comme montré sur le diagramme de la figure 1, un verre dont la température en début de trempe doit être de 620°C, pourra n'être chauffé dans le four 1 qu'à une température très peu supérieure à 620°C. Chauffé par exemple à 630°C dans le four, il sera délivré à cette température sur la forme de bombage 4 où il prendra la courbure désirée. Il sera maintenu à cette température pendant le bombage, sauf éventuellement à proximité de l'extrémité de sortie 7 de l'enceinte 5, où il subira quelque peu l'influence du soufflage du poste de trempe 8 voisin et pourra enregistrer une baisse d'une dizaine de degrés. La feuille de verre pénétrera alors dans le poste de trempe 8, à 620°C.

Dans une variante de réalisation, la forme de bombage pourra commencer ou même être située entièrement dans le four 1 de réchauffage du verre.

Comme montré sur les figures 2 et 3, les éléments de bombage de la forme de bombage 4 sont des tiges cintrées 11 entourées d'une gaine 12 entraînée en rotation autour des tiges 11 par un pignon 13 fixé à l'une de leurs extrémités et monté à rotation sur les tiges cintrées. Pour éviter les frottements, le diamètre des gaines 12 est supérieur au diamètre des tiges 11, et les gaines prennent appui de place en place sur des bagues de glissement en graphite 14 comme décrit dans la publication de brevet français 2 189 330.

Dans un premier mode de réalisation illustré par la figure 2, les tiges cintrées 11 sont percées suivant leur axe, d'un alésage 11' dans lequel on introduit un fluide caloporteur, à l'aide d'une canalisation 15 branchée sur une extémité de chacune des tiges par l'intermédiaire d'un raccord tournant 16. Sur l'autre extrémité des tiges est branchée une canalisation d'évacuation 17 qui recueille le fluide ayant circulé dans la tige 11.

Suivant une variante illustrée par la figure 3, l'extrémité de sortie des tiges 11 est bouchée et la canalisation 15 d'alimentation en fluide se prolonge à l'intérieur de la tige jusqu'à proximité de l'extrémité bouchée. Le fluide injecté par cette canalisation 15 revient en circulant à l'intérieur de l'alésage 11' jusqu'à l'extrémité d'entrée où il est évacué. Comme fluide refroidisseur, on peut employer de l'eau; on ajuste le débit pour éviter l'ébullition à l'intérieur des tiges et pour que la température de l'eau évacuée se situe autour de 80°C. On pourra également utiliser d'autres liquides dont la température d'ébullition ne sera pas supérieure à 250 ou 300°C, comme par exemple des huiles ou des sels fondus. On pourra aussi employer un gaz bien que l'efficacité soit plus réduite. Ainsi, grâce au refroidissement des tiges, on maintient les bagues en graphite et plus particulièrement leur centre, qui est en contact avec lesdites tiges et qui de ce fait est soumis à une double usure, par frottement et par oxydation, à une température relativement basse en dessous de la température où commencerait l'oxydation.

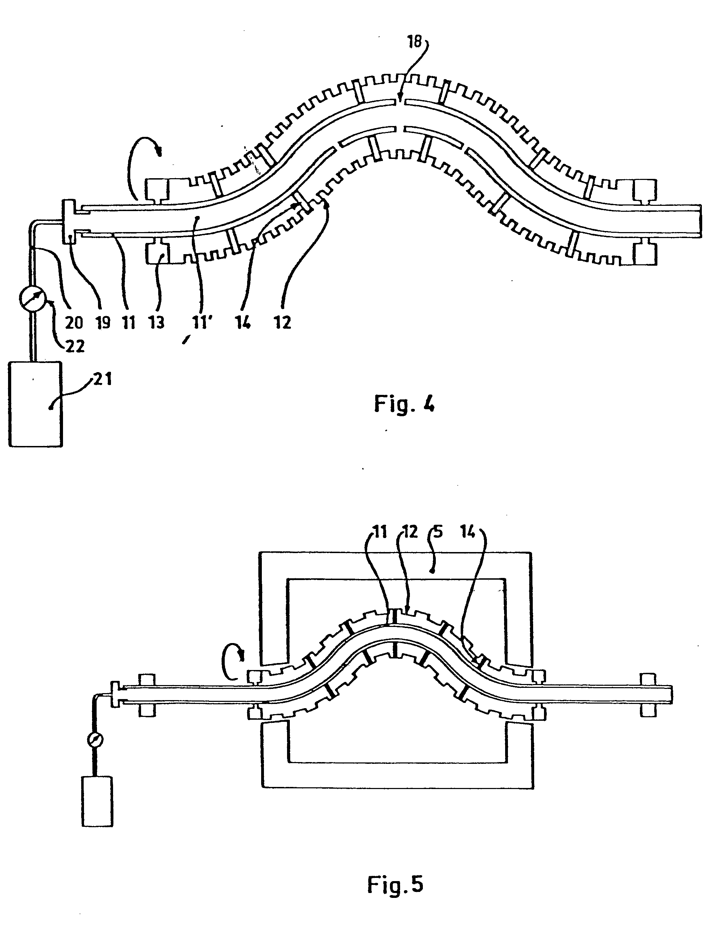

Suivant un autre mode de réalisation illustré par la figure 4, pour éviter un refoidissement trop important du verre circulant sur une forme de bombage relativement froide, on ne refroidira plus autant les tiges, mais on les placera en atmosphère neutre on réductrice pour empêcher l'oxydation des bagues en graphite.

Comme montré sur la figure 4, les tiges cintrées 11 sont percées du même alésage 11' qu'elles avaient déjà dans le mode de réalisation précédent; mais ledit alésage 11' débouche par un ou plusieurs orifices 18 dans l'espace situé entre les gaines tournantes et les tiges 11. L'injection d'un gaz réducteur ou neutre pourra se faire par une seule extrémité des tiges 11, l'autre extrémité étant alors bouchée, ou alors par les deux extrémités. L'extrémité par laquelle on injecte le gaz est alors reliée, par l'intermédiaire d'un raccord tournant 19, à une canalisation 20 branchée sur une source de gaz 21. Un débitmètre 22 peut être installé sur chaque canalisation 20 pour régler le débit de gaz dans chaque tige 11.

Le gaz employé peut être de l'azote ou un mélange d'azote et d'hydrogène. Lorsqu'on emploie de l'azote industriel, l'oxydation n'est pas totalement supprimée, des traces d'oxydation apparaissent encore, dues certainement au fait que le qualité de cet azote n'est pas constante. Il est alors préférable d'utiliser de l'azote à 99,9997% de pureté, dit azote sec, qui est pratiquement celui obtenu par évaporation de l'azote liquide.

Le débit de gaz pourra être ajusté en fonction des constatations d'oxydation sur les bagues. Des essais avec un débit de 40 litres par heure à pression et à température normales, par tige cintrée, ont donné toute satisfaction.

Comme montré sur la figure 5, pour éviter l'oxydation des bagues de glissement 13 situées à l'extrémité des tiges, par suite d'une entrée d'air, lesdites extrémités de tiges, les bagues 14 et les portions de gaines 12 qui leur sont associées seront placées à l'extérieur de l'enceinte fermée 5 qui délimite le poste de bombage. Ainsi, il y aura à chaque extrémité de tige une zone plus froide qui servira de sas et dans laquelle l'atmosphère oxydante, pénétrant malgré le balayage par azote et hydrogène, le fera sans inconvénient puisque les bagues d'extrémité de tige non totalement sous atmosphère neutre ou réductrice ne seront pas soumises aux températures élevées auxquelles elles s'oxydent rapidement.

Grâce à ce balayage par un gaz non oxydant, la température externe de la forme de bombage peut rester élevée et atteindre jusqu'à 600°C sans que les bagues en graphite se détériorent par oxydation. Bien que le balayage par le gaz fournisse un certain refroidissement, cet effet est malgré tout faible lorsque le débit reste de l'ordre de 40 l/h. La température reste donc élevée et l'acier normal employé pour les tiges 11 flue rapidement.

Pour éviter cela, il conviendra d'employer des aciers spéciaux, type aciers inoxydables. Ainsi, par exemple, l'acier de qualité inox AISI 316 L (ou Z 3 CND 18 12 suivant la norme AFNOR) dont l'analyse donne: carbone 0,03 maximum, chrome 17, nickel 11, molybdène 2,2, ayant un coefficient de dilatation à 100°C égal à $16 \times 10^{-6}$ et à 600°C à $18,5 \times 10^{-6}$ donne de bons résultats.

Pour éviter l'emploi d'acier inox, on peut combiner le balayage des tiges par un gaz et leur refroidissement par un fluide caloporteur. Une canalisation 15 d'amenée de fluide est alors branchée sur chaque tige comme montré sur les figures 2 et 3, et en outre, une tubulure étanche d'amenée de gaz pénètre à l'intérieur desdites tiges et vient déboucher par un orifice 18, montré sur la figure 4, dans l'espace situé entre les tiges et leurs gaines; ledit orifice 18 étant de préférence dans la portion centrale des tiges. Ainsi, bien que l'emploi des tiges cintrées en acier inoxydable soit toujours possible, il n'est plus indispensable, lesdites tiges restant à une température où elles ne fluent pas. A cette température basse, les parties centrales des bagues en graphite, qui sont les plus soumises à l'usure, ne s'oxydent plus, et leurs parties plus périphériques, bien qu'à température un peu plus élevées, ne risquent pas de s'oxyder non plus puisqu'elles sont placées en atmosphère non oxydante.

Le verre est ainsi bombé à une température inférieure à celle à laquelle il était bombé lorsque le bombage précédant la trempe était à l'air libre.

Le temps de bombage, pour une épaisseur de verre et pour une flèche données étant d'autant plus long que la température est plus basse, il s'ensuivra que la forme de bombage devra être allongée ou la vitesse de défilement des feuilles de verre au poste de bombage diminuée.

Le balayage des tiges cintrées par un gaz neutre ou réducteur et l'emploi d'aciers inoxydables, ou le refroidissement des tiges par un fluide caloporteur, ou encore le refroidissement des tiges combiné avec un balayage par un gaz non oxydant, sont des mesures indispensables lorsque le poste de bombage est clos mais ces mêmes mesures sont aussi avantageuses lorsque le poste de bombage est à l'air libre, car elles permettent de réduire les déformations du lit de bombage et par conséquent d'améliorer la qualité optique du verre.

En outre, les mêmes mesures peuvent être mises en oeuvre sur des tiges situées dans le poste de trempe.

## Revendications

1. Installation de bombage et de trempe de feuilles de verre, comportant une enceinte de bombage fermée (5) thermiquement isolée et à la température de bombage, renfermant une forme de bombage (4), caractérisée en ce que la forme de bombage (4) comporte des gaines tubulaires tournantes (12) reposant sur des bagues (14) en graphite montées sur des tiges cintrées (11) orientables et creuses dans lesquelles circule un fluide de refroidissement et/ou non oxydant.

2. Installation selon la revendication 1, caractérisée en ce que le fluide est amené dans les tiges cintrées (11) par des canalisations (15) de section inférieure à celle de l'intérieur des tiges cintrées (11), et qui sont introduites à l'intérieur desdites tiges (11) à une extrémité, de celles-ci l'autre extrémité étant bouchée et le retour du fluide se faisant par l'intérieur des tiges cintrées entre la canalisation (15) et leur paroi interne.

3. Installation selon l'une des revendications 1 ou 2, caractérisée en ce que le fluide circulant dans les tiges cintrées (11) est un liquide refroidisseur à point d'ébullition inférieur à 300°C, du type eau, huile, ou sel fondu.

4. Installation selon l'une des revendications 1, 2 ou 3, caractérisée en ce qu'une tubulure d'amenée de gaz neutre ou réducteur pénètre à l'intérieur de chaque tige cintrée (11) et débouche dans l'espace compris entre la tige elle-même et sa gaine (12).

5. Installation selon l'une des revendications 1 ou 2, caractérisée en ce que les tiges cintrées (11) sont des tiges en acier spécial, type acier inoxydable, mumies d'au moins un orifice faisant correspondre leur intéreur avec l'espace extérieur limité par leur gaine (12), les canalisations d'amenée de fluide branchées sur elles étant des canalisations (20) d'amenée d'un gaz neutre ou réducteur.

6. Installation selon la revendication 5, caractérisée en ce que les orifices (18) faisant correspondre l'intérieur des tiges cintrées (11) avec l'espace extérieur limité par leur gaine (12), sont situés dans la portion centrale des tiges (11).

7. Installation selon l'une des revendications 1 à 6, caractérisée en ce que les extrémités des tiges cintrées (11), les portions de gaines (12) recouvrant lesdites extrémités, et les bagues en graphite (14) situées aux extrémités des tiges cintrées (11) sont maintenues à l'extérieur de l'enceinte (5) de bombage.

## Patentansprüche

1. Einrichtung zum Biegen und Vorspannen von Glasscheiben, bestehend aus einem ge-

7 **0 005 389** 8

schlossenen, thermisch isolierten und sich auf Biegetemperatur befindlichen Biegeraum (5), und der eine Biegeform (4) enthält, dadurch gekennzeichnet, daß die Biegeform (4) rohrförmige, umlaufende Hülse (12) aufweist, die auf Graphitringen (14) ruhen, welche auf gebogenen einstellbaren und hohlen Stäben (11) montiert sind, in denen ein Kühlmittel und/oder ein nicht oxydierendes Gas zirkuliert.

2. Einrichtung nach Anspruch 1, dadurch gekennzeichnet, daß das Mittel den gebogenen Stäben (11) durch Leitungen (15) zugeführt wird, deren Querschnitt unterhalb desjenigen des Inneren der gebogenen Stäbe (11) liegt und die in dieses Innere der Stäbe (11) an einem Ende derselben eingeführt sind, während das andere Ende umgebogen ist, und daß der Rückfluß des Mittels sich durch das Innere der gebogenen Stäbe zwischen den Leitungen (15) und der Innenwand vollzieht.

3. Einrichtung nach einem der Ansprüche 1 oder 2, dadurch gekennzeichnet, daß das in den gebogenen Stäben (11) zirkulierende Mittel eine Kühlflüssigkeit mit einem Siedepunkt unter 300°C vom Typ Wasser, Öl oder geschmolzenes Salz ist.

4. Einrichtung nach einem der Ansprüche 1, 2 oder 3, dadurch gekennzeichnet, daß ein Zuführungsrohr für neutrales oder reduziertes Gas in das Innere jedes gebogenen Stabes (11) eindringt und in den Raum zwischen dem Stab selbst und seiner Hülse (12) ausmündet.

5. Einrichtung nach einem der Ansprüche 1 oder 2, dadurch gekennzeichnet, daß die gebogenen Stäbe (11) aus Spezialstahl in Art von nicht oxydierendem Stahl bestehen und wenigstens eine Öffnung aufweisen, die ihr Inneres mit dem Außenraum in Verbindung setzt, der durch ihre Hülse (12) begrenzt ist, wobei die an sie angeschlossenen Zuführungsleitungen für das Mittel Zuführungsleitungen (20) für ein neutrales oder reduzierendes Gas sind.

6. Einrichtung nach Anspruch 5, dadurch gekennzeichnet, daß die das Innere der gebogenen Stäbe (11) mit dem nach außen durch die Hülse (12) begrenzten Raum verbindenden Öffnungen (18) im mittleren Teil der Stäbe (11) angeordnet sind.

7. Einrichtung nach einem der Ansprüche 1 bis 6, dadurch gekennzeichnet, daß die Enden der gebogenen Stäbe (11), die diese Enden abdeckkenden Teile der Hülsen (12) und die Graphitringe (14) an den Enden der hohlen Stäbe (11) außerhalb des Biegeraumes (5) gehalten sind.

## Claims

1. Apparatus for curving and tempering glass sheets, comprising a closed enclosure for curving (5) which is thermally insulated and at the temperature for curving, containing a curving former (4), characterised in that the curving former (4) comprises rotating tubular sheaths (12) resting on graphite rings (14) mounted on curved, orientable hollow rods (11) through which passes a fluid which is for cooling and/or is non-oxidising.

2. Apparatus according to claim 1, characterised in that the fluid is fed to the curved rods (11) by ducts (15) having a cross-section less than that of the interoir of the curved rods (11) and which are introduced inside said rods (11) at an end of the latter, the other end being closed and return of the fluid being effected through the inside of the curved rods between the duct (15) and their interior wall.

3. Apparatus according to one of claims 1 and 2, characterised in that the fluid passing through the curved rods (11) is a cooling liquid having a boiling point less than 300°C, of the water, oil or molten salt type.

4. Apparatus according to one of claims 1, 2 and 3, characterised in that a pipe for feeding a neutral or reducing gas penetrates inside each curved rod (11) and leads into the space between the rod itself and its sheath (12).

5. Apparatus according to one of claims 1 and 2, characterised in that the curved rods (11) are rods of special steel, of the stainless steel type, provided with at least one orifice connecting their interior to the exterior space limited by their sheath (12), the ducts for feed of fluid connected to them being ducts (20) for feed of a neutral or reducing gas.

6. Apparatus according to claim 5, characterised in that the orifices (18) connecting the interior of the curved rods (11) to the exterior space limited by their sheath (12) are positioned in the central part of the rods (11).

7. Apparatus according to one of claims 1 to 6, characterised in that the ends of the curved rods (11), the portions of the sheaths (12) covering said ends and the graphite rings (14) positioned at the ends of the curved rods (11) are outside the curving enclosure (5).

Fig.1

Fig.2

Fig.3

Fig. 4

Fig. 5